# EUROPEAN PATENT APPLICATION

(11) **EP 4 518 107 A1**
(43) Date of publication of application: **05.03.2025**
(21) Application number: 23461640.7
(22) Date of filing: 30.08.2023
(51) Int. Cl.: H02K 5/20

(54) **MOTOR RADIATOR**

(71) Applicant: Hamilton Sundstrand Corporation, Charlotte, NC 28217 (US)
(72) Inventor: M CZKOWSKI, Tomasz, 51-317 Wroclaw (PL); KA U A, Przemys aw Stanislaw, 51-317 Wroclaw (PL)
(74) Representative: Dehns

(57) **Abstract**

A cooling structure for a rotary electric machine, the structure comprising an annular radiator body (30) defining an axis X between a first end and a second end, the annular body having a radially inner wall and a radially outer wall and a plurality of channels (35) defined between the radially inner wall and the radially outer wall, each extending from the first end to the second end, each channel having an inner channel wall and comprising a plurality of vanes extending inwardly into the channel from the channel wall.

## Description

### TECHNICAL FIELD

The present disclosure is concerned with a cooling structure or radiator for a rotary electrical motor.

### BACKGROUND

A rotary electrical machine or motor comprises a rotor and a stator mounted coaxially within a motor housing. In an inner-rotor type, the motor comprises a rotating motor shaft rotatable about an axis, a rotor rotatably disposed to the rotor shaft and a stator mounted coaxially around the rotor, within the housing. The rotor has a rotor core and a plurality of permanent magnets supported by the core. The stator is provided with windings between gaps around the stator. Other electric motor designs have an outer-rotor design where the rotor is mounted and rotates around the stator. In either case, heat is generated by the relative rotation of the rotor and the stator and so typically, motors are provided with a cooling structure (or radiator) provided within the housing - typically as an annular body defining a plurality of axially extending channels between the outermost of the rotor and the stator, and the housing. The cooling structure is provided with one or two inlets at a first end and an outlet at a second, opposite end. Coolant e.g. air or liquid is provided to the structure at the inlet (in the case of two inlets, these may be used selectively depending on the context in which the motor is mounted) and flows through the channels to the outlet. The walls of the channels are adjacent the motor structure and so heat generated by operation of the motor passes through the walls and is absorbed by the coolant as it passes through the channels. The coolant thus becomes warmer by drawing heat away from the motor as it passes through the channels and warm coolant is ejected at the outlet.

While conventional radiators have proven fit for purpose, there is a desire for improved cooling structures that can provide more effective and efficient cooling without adding to the cost, complexity, size or weight of the structure.

### SUMMARY

According to the present disclosure, there is provided a cooling structure for a rotary electric machine, the structure comprising an annular radiator body defining an axis X between a first end and a second end, the annular body having a radially inner wall and a radially outer wall and a plurality of channels defined between the radially inner wall and the radially outer wall, each extending from the first end to the second end, each channel having an inner channel wall and comprising a plurality of vanes extending inwardly into the channel from the channel wall.

### BRIEF DESCRIPTION

Examples of the radiator according to this disclosure will now be described with reference to the drawings. It should be noted that these are examples only, and variations are possible within the scope of the claims.
Figure 1 is a three-dimensional view of a conventional rotary electric motor with a cooling structure.
Figure 2 is a detailed view of a channel of a radiator according to the disclosure, looking into the channel from an end.
Figure 3 is a planar view of a channel of a radiator according to the disclosure.
Figure 4 shows the formation of vortices in an example of a channel of a radiator according to the disclosure.

### DETAILED DESCRIPTION

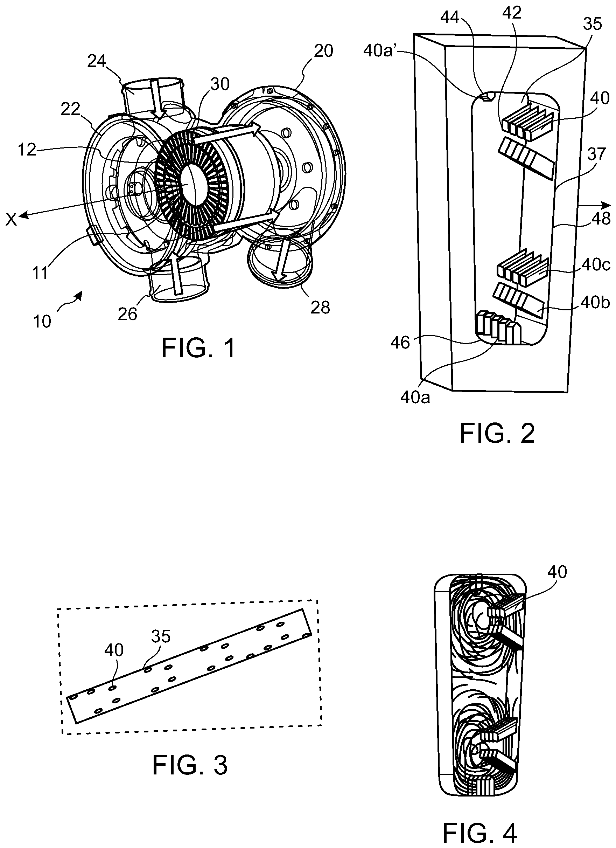

As mentioned above, a rotary electrical machine or motor typically comprises a rotor and a stator. In the example shown in Fig. 1, the motor 10 has a rotor in the form of a rotatable shaft 11, rotatable about an axis X around which is mounted, coaxially, a stator 12. The stator includes stator windings in stator gaps around the stator body as is conventional. The structure and operation of the rotary motor are conventional and well-known and will not be described further. The example shows an inner-rotor design. The motor could, however, also be an outer rotor/inner-stator design. Again, such motors are conventional and will not be described further.

Due to the rotation of the rotor relative to the stator, voltage and heat are generated at the stator. For efficiency and, in some cases, safety, there is a need to remove that heat from the motor. This is typically provided for by a cooling structure.

A housing 20 containing the stator and the rotor also contains a cooling structure between the motor parts 11, 12 and the housing 20. The cooling structure is typically an annular radiator 30 mounted around the motor parts having a plurality of channels 35 (seen in Figs. 2 to 4) extending axially from one end of the motor to the other. A manifold 22 is provided on the housing to provide coolant to and for coolant to exit from the radiator. In the example shown, the manifold 22 is provided with two inlets 24, 26 to which coolant can be provided selectively. For example, if the motor is provided for an aircraft, it could be mounted to either a left side or a right side and so the inlet 24, 26 on that side will be used and the other will be blocked off. In other examples, the manifold may only have a single inlet. The manifold also has an outlet 28 via which the coolant exits after it has passed through the radiator 30. The coolant may be air (e.g. ambient or cooled air e.g. RAM air in the case of an aircraft) or may be a coolant fluid or gas.

Conventionally, the radiator is machine manufactured using molding or other techniques and the channels have smooth inner walls. According to the present disclosure, the performance of the radiator is improved by providing a plurality of vanes 40 extending into the channels 35 from an inner wall 37 of the channel. The vanes present an interruption to the flow of fluid e.g. air through the channel causing a mixing of the turbulent boundary layer and providing high energy bulk flow near the channel walls. The vanes extend from the wall into the interior of the channel and a plurality of vanes is arranged axially along the length of the channel from a first end to a second end. In an example, the vanes are arranged at an angle of greater than 0 deg. and less than 90 deg. relative to the channel wall. The vanes may be formed in various shapes but are preferably in the form of an elongate, relatively flat plate. In one example, as shown the vanes are provided with a rounded end distal 42 as the end that is distal from the channel wall to which the vane is attached.

Whilst any arrangement of vanes extending into the channel will have beneficial heat flow properties, vanes arranged in groups of axial rows, such as in the example shown, may have advantageous properties. In the example shown, the vanes comprise groups of three axial rows, a first row 40a extending from a top 44 or bottom 46 part of the channel wall, and then second 40b and third 40c rows provided in a side part 48 of the channel wall. In one embodiment, the second and third rows are inclined towards each other such that the distal ends 42 of the vanes in the second and third rows are closer than their opposite ends attached to the channel wall. In the example shown, the first row extends from the channel wall at substantially 90 degrees. Particularly improved properties have been found where the vanes are arranged to have two such groups of three rows, one group with the first row 40a extending from the bottom of the channel (the part of the channel wall that is radially inwards when defined relative to the motor axis) and a second group with the first row 40a' extending from the top (radially outer with respect to the motor axis) of the channel wall. This particular arrangement results in the formation of two main and counter-rotating vertices in the fluid as it flows through the channel, as shown in Fig. 4. The vortices mix fluid e.g. air that has already been heated up by the heat exchange with new air that is not yet warmed. This leads to enhanced heat transfer between the fluid/air and the channel walls.. Whilst this arrangement has, in tests, showed particularly good heat transfer properties, this is just one example and the number and arrangement of vanes may vary within the scope of the present concept. A greater number of vertices provides more turbulence, but at the cost of greater complexity and manufacturing difficulty as well as at the cost of a greater pressure drop. Spacing the vanes or the groups of vanes further away from each other minimises pressure drop in the fluid flow along the channel. The vanes, which can be made by additive manufacture, provide an increased heat transfer surface area for the medium in the channel 35.

The vanes provide additional surface area, for each channel, compared to channels only having their outer walls defining the heat transfer surfaces. Further, the vanes add turbulence and maximise heat transfer area for a given length of channel.

Measurements taken for radiators using this design have shown an improved heat transfer area, and, therefore, increased heat exchange efficiency factor compared to conventional straight channels. The resulting disturbances in flow structure lead to an energy exchange between individual gas particles and the solid surface of the channel, which contributes to higher heat transfer efficiency. Although there is an increase in pressure drop across the channels, one can still observe an overall improvement compared to the channels of the conventional designs. The shape and size of the vanes, as well as the angle, distribution pattern and density of the vanes can be adjusted according to application requirements.

The formation of channels having such configurations have recently become possible due to the advent of and advances in additive manufacturing (AM) technology. AM allows the radiator of this disclosure to be formed in a simple and economic manner. Alternatively, however, the channels could be formed using other known methods.

## Claims

1. A cooling structure for a rotary electric machine, the structure comprising an annular radiator body (30) defining an axis X between a first end and a second end, the annular body having a radially inner wall and a radially outer wall and a plurality of channels (35) defined between the radially inner wall and the radially outer wall, each extending from the first end to the second end, each channel having an inner channel wall and comprising a plurality of vanes extending inwardly into the channel from the channel wall.

2. The cooling structure of claim 1, wherein the vanes include vanes extending from the channel wall at an angle of greater than 0 degrees and less than 90 degrees relative to the wall from which they extend.

3. The cooling structure of claim 1 or 2, wherein each vane has a rounded distal end, being the end distal from the wall from which the vane extends.

4. The cooling structure of claim 1, 2 or 3, wherein the plurality of vanes comprises a plurality of axial rows of vanes.

5. The cooling structure of claim 4, the plurality of vanes comprising a plurality of groups of axial rows of vanes.

6. The cooling structure of claim 5, comprising two groups of three axial rows of vanes.

7. The cooling structure of claim 6, wherein each group comprises a first row of vanes extending from a top or bottom portion of the channel wall and second and third rows of vanes extending from a side portion of the channel wall.

8. The cooling structure of claim 7, wherein the first row extends from the channel wall at substantially 90 degrees, and wherein the second and third rows are arranged to be inclined towards each other at their distal ends.

9. The cooling structure of any preceding claim wherein the radiator body is formed by additive manufacturing.

10. The cooling structure of any of claims 1 to 8, wherein the radiator body is formed by a lost-wax casting method.

11. The cooling structure of any preceding claim wherein the vanes are formed by additive manufacturing.

12. The coolant structure of any preceding claim, further comprising a coolant inlet at the first end and a coolant outlet at the second end.

13. A rotary electric motor comprising a rotor and a stator in coaxial arrangement and a cooling structure as claimed in any preceding claim around the rotor and stator.

14. A rotary electric motor as claimed in claim 13, wherein the coolant is air.

15. A rotary electric motor as claimed in any of claims 13 and 14, being a motor in an aircraft.
